# EUROPEAN PATENT SPECIFICATION

(11) **EP 0 885 706 B1**
(45) Date of publication and mention of the grant of the patent: **23.07.2003**
(21) Application number: 98304831.5
(22) Date of filing: 19.06.1998
(51) Int. Cl.: B29C 44/34, B29C 44/18

(54) **Apparatus and method for making panels**
Vorrichtung und Verfahren zur Herstellung von Paneelen
Procédé et dispositif de fabrication de panneaux

(30) Priority: 20.06.1997 GB 9713113
(43) Date of publication of application: 23.12.1998
(73) Proprietor: Space4 Limited, Bristol, BS32 4UB (GB)
(72) Inventor: Williams, Keith, Mevagissey, Cornwall PL26 6PN (GB)
(74) Representative: Bryer, Kenneth Robert

(56) References cited:
- EP-A- 0 472 906
- US-A- 4 002 002
- US-A- 4 818 604
- PATENT ABSTRACTS OF JAPAN vol. 016, no. 141 (M-1232), 9 April 1992 (1992-04-09) -& JP 04 001007 A (OM KIKI KK), 6 January 1992 (1992-01-06)

## Description

This invention relates to an apparatus and a method for making panels, especially building panels suitable for use as thermal insulation panels.

Laminated building panels comprising a volume of insulating foam sandwiched between two layers (panel walls) of material are well known. In most cases, the insulating foam is either a polyurethane foam, a polystyrene foam or a phenol/aldehyde (hereafter "phenolic") foam. Furthermore, in such laminates, the panel walls sandwiching the foam are usually boards made from lignocellulosic material which may be block wood, sheets of wood, chipboards and fibre-boards or boards incorporating glass-fibre and/or resin reinforcements.

One of the conventional methods of producing thermal insulation panels is to introduce initially into a hollow panel a formulation comprising (a) the insulant foamable material in its uncured state, (b) a blowing agent, and (c) a curing agent, and then to allow the foamable material to cure in situ inside such hollow panels by placing the hollow panels containing the formulation in an oven maintained at an elevated temperature. This procedure allows the foamable material to expand and cure into a rigid insulant thereby filling the hollow space inside the panel. One of the problems with this procedure is that the usual lignocellulosic material forming the panel walls is also an insulant; this inherent characteristic of the walls results in inefficient transfer of heat to the formulation in the hollow panels during the heating/curing stages inside the oven. As a further consequence of this inefficiency, the curing of the formulation inside the hollow panels is either uneven or takes an inordinately long time to cure thereby resulting in either a substandard insulating panel or inefficient use of valuable heat energy. This is particularly true when the insulant is a phenolic foam.

It has now been found that the problems associated with such inefficient curing methods can be alleviated by circulating warm air through the hollow panels prior to curing.

Therefore, according to the present invention, there is provided a method for making building panels, which method includes:
(a) supplying at least one hollow panel to a pre-heated oven;
(b) introducing into the or each hollow panel a dosed amount of uncured foamable formulation; and
(c) subjecting the or each panel containing the uncured formulation to an elevated temperature to enable foaming and curing of the formulation inside the or each panel;
characterised in that prior to step (b) warm air is circulated in the pre-heated oven so as to achieve a heated hollow panel having a substantially uniform determined temperature both inside and outside the respective hollow panel.

It is preferred that the hollow panel is subjected to a load (for example, by means of a press or the like) prior to step (b).

Each hollow panel is typically of a box-shape having a length and breadth substantially greater than the thickness thereof. The walls of the panel preferably comprise a thermal insulating material. Further preferably the walls comprise lignocellulosic materials, such as sheets of wood, preferably made from chipboards, reinforced fibre-boards or the like.

The walls of the hollow panel preferably have a plurality of ports therein. The ports are arranged to enable the hollow panel to be filled with an appropriate dosed amount of the formulation, but also for air from the hollow panel to be expelled when the formulation therein expands when it is being cured, and also to enable warm air to be circulated inside the hollow panel prior to the formulation being introduced.

Typically, the ports are drilled or punched. Preferably, the ports are provided along the thickness of the or each panel, thereby allowing the foamable formulation sufficient opportunity to expand and fill out the hollow space inside the or each panel before excess foam is forced out of the or each panel through the ports which then act as bleed holes.

The number of ports in the panel will depend upon the size and shape of the panels, but usually for a panel of rectangular dimensions 3000 mm x 1200 mm x 100 mm, it is preferred that a plurality of sets of ports extend along the thickness wall at intervals of about 500 mm. Each set of ports typically comprises at least three ports. Such ports may be rectangular or square; circular ports are preferred.

Advantageously, excess foamable formulation which has percolated through the ports is trimmed flush with the outside surface of the or each panel, so as to give a smooth appearance, and for ease of stacking and transportation.

The warm air circulated prior to the foamable formulation being introduced into the hollow panels may be either pre-heated and pumped from an external source or (preferably) is air which is heated by convection from the heat of the curing oven and then pumped into the hollow panel. The rate of circulation of warm air within the hollow panel will depend upon the shape and size of the panel, the amount of the foamable formulation to be cured and the duration of the cure in order to optimise coverage of surface area without sacrificing any of the desirable thermal insulating characteristics of the foamed product.

The foamable formulation generally includes (a) a resin curable into a rigid form, (b) a blowing agent, and (c) a curing agent.

The foamable formulation used according to the present invention may be any of the conventional types such as e.g. polyurethane, polystyrene or phenolic resin. It is preferably derived from a phenol/aldehyde resin to form a phenolic foam. A typical resin of this type is Cellobond® commercially sold by Blagden Chemicals Limited.

According to a second aspect of the present invention, there is provided an apparatus for producing foam filled panels; characterised in that the said apparatus comprises
a means for circulating hot air through at least one hollow panel;
a means for introducing a foamable formulation into the hollow region of the said hollow panel;
press means for applying a pre-determined load to the said panel for at least partial curing of the said foamable formulation in the said panel when in the said press means
oven means for positioning the said at least partially cured panel until the foaming and curing is substantially complete
are transport means for at least transporting the said panel to the said means for circulating hot air; the said means for introducing foamable formulations, the said press means and the said oven means.

Preferably, the apparatus further includes means for assembling the or each hollow panel capable of being filled with the foamable formulation.

The means for supplying the or each hollow panel may include means for stacking and/or means for transporting the or each hollow panel.

The means for assembling the or each hollow panel and/or supplying the or each hollow panel may be manual or mechanical. Where the means is mechanical it is preferably operated by robotic units.

The stacking of the or each panel may be achieved by placing them horizontally one above the other suitably spaced from each other to maximise the surface area of each panel available to be in contact with the warm air/heat in the respective ovens.

The means for transporting the assembled hollow panels and any of the panels emerging from the subsequent stages may be a rolling track or base.

The hot air is preferably circulated by means of a pump which is typically connected by a pipe or hose to one or more of the ports in the respective wall running along the thickness of the panel.

The oven is preferably pre-heated and is further preferably maintained at the desired temperature by means of the circulating warm air inside the oven which air also circulates inside the hollow of each panel.

The press is preferably a hydraulic press. When each panel has been subjected to the desired pressure for a specific duration, a specific, dosed amount of the foamable formulation is introduced into the hollow of each panel. The or each panel containing the foamable formulation is preferably allowed to remain in the press for a further duration to enable the formulation therein to at least cure partially (although it can also be allowed to cure substantially fully).

The means for transporting the or each panel to a post-cure oven so as to take the curing process to completion so that the panel is filled with a rigid foam is preferably a moving table.

The apparatus preferably further includes means for recovering the panels from the post-cure oven.

The process is preferably carried out in a plant room maintained at a predetermined constant temperature (for example at about 22°C, when a formulation for phenolic foam insulant is used, so as to ensure free flow of the materials flowing through a mixing head). The plant room is generally provided with means for removing all gases from the air by an air-flow system with a heat recovery system operated at a controlled efficiency of 70%.

The foamable formulation is preferably mixed in a mixing room which, has a barrel roller and has extraction fans operable at variable speeds to discharge/vent any unwanted fumes outside of the buildings. The phenolic resin, where used, and the appropriate curing agent, are preferably stored in a sealed environment at a temperature of about 10°C to maximise shelf life.

The invention may be more clearly understood from the following description given by way of example only, with reference to the accompanying drawings, wherein:
Figure 1 is a schematic diagram of a plant which utilises the method according to the invention; and
Figure 2 is a perspective view from above and one side of a hollow panel prior to introduction of a dosed amount of uncured foamable formulation in the method according to the invention.

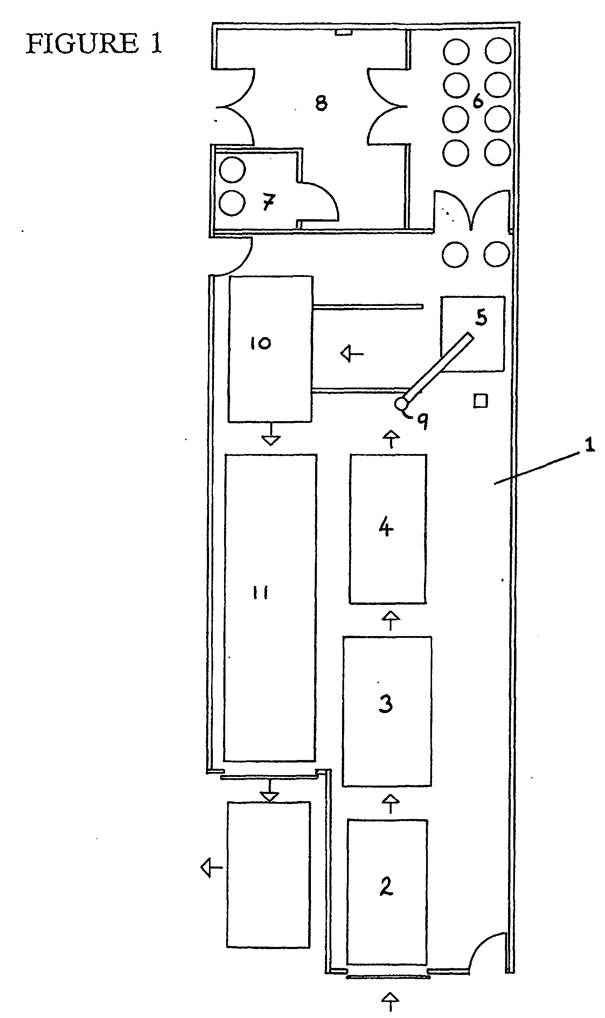

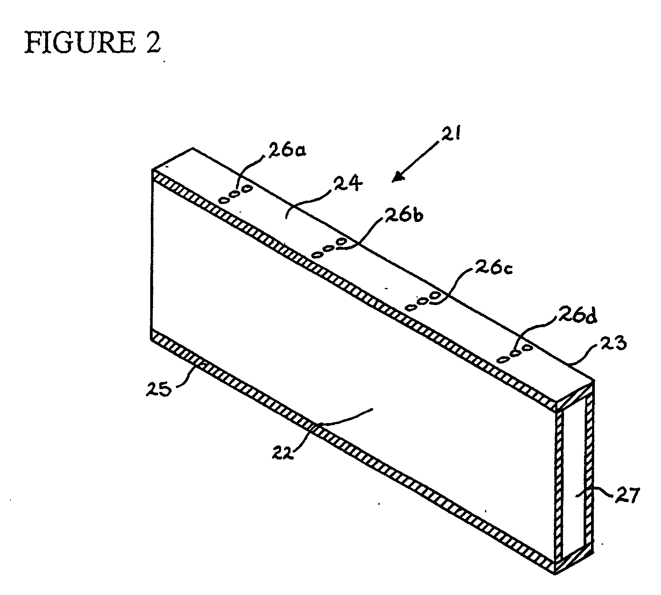

Referring to Figure 1, the hollow panels are assembled outside the main plant room 1 and then rolled onto a stacking station 2, using for example, a stacking table which has a rolling base. The structure of the stacking station may be varied in height and other dimensions to enable a suitable number of such hollow panels to be stacked. The stacked hollow panels then wait their turn to be rolled into a pre-heat station 3. The pre-heat station 3 typically comprises an oven, for example, of steel and additionally includes a rolling table. The pre-heat station 3 is a highly insulated oven and has its temperature controlled, typically at about 115°C. Warm or heated air is injected through special ports/bleed holes drilled into the walls along the thickness of the panels (shown in Figure 2) directly into the hollow panels giving an overall internal and external temperature of about 50°C; the heating is carried out over a period of about 30 minutes.

The panels are then rolled into a pressing station 4 which is suitably a 50-100 tonne hydraulic machine that keeps the panels in a stable condition whilst allowing foaming to take place. The foaming formulation, when it comprises a phenolic resin, is maintained at about 22°C to allow free flow of the formulation to the mixing head. The formulation is mixed at station 5. The desired proportions are taken from the phenolic store 6 and catalyst store 7 into a mixing room 8. The formulation is injected into the hollow panels via an injection head 9 whilst still in the pressing station 4 and then allowed to cure and expand in pressing station 4 at a temperature of 50°C for a further 30 minutes.

The pressing station 4 is used to control the degree of expansion of the foamable formulation inside the panel so that the panel retains its structural integrity. The panels stay in this condition after foaming for 30 minutes and at this point the temperature of the hollow panels is about 50°C. Thereafter the filled panels are removed from the pressing station 4 and placed on a rolling/moving table from whence the panels are transported (via station 10) into line with a post-cure oven 11 which also has a rolling base to transport the panels. The post-cure oven 11 is suitably placed and the panel routed in such a way that the post-cure oven 11 is juxtaposed next to the pre-heat station 3 and the pressing station 4 so as to enable it to use the convection heat from the pre-heat station 3. The temperature of the post-cure oven 11 is typically maintained at 30°C by the convection heat from the pre-heat station 3 and the panels stay in the post-cure oven 11 for a further 60 minutes (two sets of 30 minutes each) in order to complete the cure.

The total duration of the curing process from the time the hollow panel enters the pressing station 13 to finally leaving the post-cure oven 11 is about 2 hours and in this duration, the temperature of the panels remain substantially constant, ie not dropping more than about 5°C. This is the feature of the invention - achieved by the warm air circulation in the pre-heat station 3 and the juxtaposition of the relevant ovens - which enables the foam in the panels to be cured to an uniform and optimum level. The finished panels are then rolled onto a further rolling table 12 and are lifted by fork-lift trucks and stacked/stored.

Referring to Figure 2, a hollow panel 21 comprises a face panel 22, a back panel 23, and two side panels 24, 25 extending along the thickness of the panel. Front panel 23, back panel 23 and side panels 24, 25 are reinforced fibre boards.

Side panels 24, 25 include four set of ports 26a, 26b, 26c and 26d (sets of ports in panel 25 not shown). Each set of ports 26a, 26b, 26c and 26d comprise three individual ports.

Side panels 24 and 25 are attached to front panel 22 and back panel 23 by conventional nailing, screws, adhesive or the like, so as to leave a hollow core 27.

## Claims

1. A method for making building panels, which method includes:
(a) supplying at least one hollow panel (21) to a pre-heated oven (3);
(b) introducing a dosed amount of uncured foamable formulation into the or each hollow panel; and
(c) subjecting the or each panel containing said uncured formulation to an elevated temperature to enable foaming and curing of said formulation inside the or each panel
**characterised in that** prior to step (b) warm air is circulated in said pre-heated oven (3) so as to achieve a heated hollow panel having a uniform determined temperature inside and outside said respective hollow panel.

2. A method according to Claim 1, wherein said hollow panel is of a box-shape having a length and breadth substantially greater than the thickness thereof.

3. A method according to Claim 1 or 2, wherein said panel is thermal insulating (for example, of a lignocellulosic material).

4. A method according to any of Claims 1 to 3, wherein said hollow panel includes a plurality of ports (26) (which are preferably punched or drilled, and which may be in walls extending along the thickness of the or each panel.

5. A method according to any of Claims 1 to 4, wherein said warm air is pre-heated and pumped from an external source, or heated by convection from the heat of the curing oven, and pumped into the hollow panel.

6. A method according to any of Claims 1 to 4, wherein said foamable formulation includes a resin curable into a rigid foam, a blowing agent and a curing agent.

7. A method according to any of Claims 1 to 6, wherein said foamable formulation is a polyurethane, polystyrene or a phenolic resin.

8. An apparatus for producing foam filled panels; **characterised in that** the said apparatus comprises:
a means (3) for circulating hot air through at least one hollow panel;
a means (9) for introducing a foamable formulation into the hollow region of the said hollow panel;
press means (4) for applying a pre-determined load to the said panel, for at least partial curing of the said foamable formulation in the said panel when in the said press means;
oven means (11) post curing the said at least partially cured panel until the foaming and curing is substantially complete;
are transport means for at least transporting the said panel to the said means for circulating hot air; the said means for introducing foamable formulations, the said press means and the said oven means.

9. Apparatus according to Claim 8, which further includes means for assembling the or each hollow panel, and/or means (12) for recovering said panels from said post-cure oven.

10. Apparatus according to Claim 8 or 9, wherein said means for transporting said hollow panels is a rolling track or base, or a moving table.

## Patentansprüche

1. Verfahren zur Herstellung von Baupaneelen, umfassend die Schritte des
(a) Zuführens wenigstens eines Hohlpaneels (21) zu einem vorgewärmten Ofen (3),
(b) Einführens einer bestimmten Menge einer nicht ausgehärteten, schaumfähigen Formulierung in das oder jedes Hohlpaneel, und
(c) Aussetzens des oder jedes Hohlpaneels, das die nicht ausgehärtete Formulierung enthält, einer erhöhten Temperatur, um das Aufschäumen und Aushärten der Formulierung im Inneren des oder jedes Paneels zu ermöglichen,
**dadurch gekennzeichnet, dass**
vor dem Schritt (b) Warmluft im vorgewärmten Ofen (3) in Umlauf gebracht wird, um ein erwärmtes Hohlpaneel mit einer gleichbleibenden Temperatur im Inneren und außerhalb des jeweiligen Hohlpaneels zu erreichen.

2. Verfahren nach Anspruch 1, bei dem das Hohlpaneel eine kastenähnliche Form mit einer Länge und einer Breite, die wesentlich größer als deren Dicke ist, aufweist.

3. Verfahren nach Anspruch 1 oder 2, bei dem das Paneel wärmeisolierend ist (z.B. aus Holzzellulose-Material besteht).

4. Verfahren nach einem der Ansprüche 1 bis 3, bei dem das Hohipaneel mehrere Öffnungen (26) aufweist, die vorzugsweise gestanzt oder gebohrt sind und sich in Wänden, die sich längs der Dicke des oder jedes Paneels erstrecken, befinden können.

5. Verfahren nach einem der Ansprüche 1 bis 4, bei dem die Warmluft von einer externen Quelle vorgewärmt und gepumpt wird, oder durch Konvektion der Wärme des Härteofens erwärmt und in das Hohlpaneel gepumpt wird.

6. Verfahren nach einem der Ansprüche 1 bis 4, bei dem die schaumfähige Formulierung ein Harz, das zu einem harten Schaumstoff aushärten kann, ein Treibmittel und einen Härtemittel umfasst.

7. Verfahren nach einem der Ansprüche 1 bis 6, bei dem die schaumfähige Mischung Polyurethan, Polystyrol oder ein Phenolharz ist.

8. Vorrichtung zur Herstellung von mit Schaum gefüllten Paneelen,
**dadurch gekennzeichnet, dass**
die Vorrichtung
- ein Einrichtung (3) zum Zirkulieren von Heißluft durch wenigstens ein Hohlpaneel,
- eine Einrichtung (9) zum Einführen einer schaumfähigen Formulierung in den Hohlbereich des Hohlpaneels,
- eine Druckeinrichtung (4) zum Aufbringen einer vorgegebenen Last auf das Paneel, um die schaumfähige Formulierung in dem Paneel wenigstens teilweise auszuhärten, wenn sie sich in der Druckeinrichtung befindet,
- eine Ofeneinrichtung (11), um das wenigstens teilweise ausgehärtete Paneel nachzuhärten, bis das Aufschäumen und Aushärten im wesentlichen beendet ist, und
- eine Transporteinrichtung, um das Paneel wenigstens zur Einrichtung zum Zirkulieren von Heißluft, zur Einrichtung zum Einführen einer schaumfähigen Formulierung, zur Druckeinrichtung und zur Ofeneinrichtung zu transportieren
aufweist.

9. Vorrichtung nach Anspruch 8, die weiterhin eine Einrichtung zum Zusammenbauen des oder jedes Hohlpaneels und/oder eine Einrichtung (12) zum Entnehmen des Paneels aus dem Härteofen umfasst.

10. Vorrichtung nach Anspruch 8 oder 9, bei der die Einrichtung zum Transportieren des Hohlpaneels eine Laufrollenbahn bzw. ein Laufrollenboden oder ein beweglicher Tisch ist.

## Revendications

1. Procédé de réalisation de panneaux de construction, lequel procédé comprend :
(a) la fourniture d'au moins un panneau creux (21) à une étuve préchauffée (3),
(b) l'introduction d'une quantité dosée de formulation pouvant mousser non durcie dans le ou chaque panneau creux, et
(c) le fait de soumettre le panneau ou chaque panneau contenant ladite formulation non durcie à une température élevée pour permettre le moussage et le durcissement de ladite formulation à l'intérieur du ou de chaque panneau
**caractérisé en ce qu'**avant l'étape (b) de l'air chaud est mis à circuler dans ladite étuve préchauffée (3) de façon à obtenir un panneau creux chauffé présentant une température déterminée uniforme à l'intérieur et à l'extérieur dudit panneau creux respectif.

2. Procédé selon la revendication 1, dans lequel ledit panneau creux présente une forme de boîte ayant une longueur et une largeur sensiblement supérieures à l'épaisseur de celui-ci.

3. Procédé selon la revendication 1 ou 2, dans lequel ledit panneau est isolant thermiquement (par exemple, constitué d'un matériau lignocellulosique).

4. Procédé selon l'une quelconque des revendications 1 à 3, dans lequel ledit panneau creux comprend une pluralité d'orifices (26) lesquels sont de préférence poinçonnés ou forés, et lesquels peuvent se situer dans des parois s'étendant le long de l'épaisseur du ou de chaque panneau.

5. Procédé selon l'une quelconque des revendications 1 à 4, dans lequel ledit air chaud est préchauffé et pompé à partir d'une source externe, ou chauffé par convection à partir de la chaleur de l'étuve de durcissement, et refoulé dans le panneau creux.

6. Procédé selon l'une quelconque des revendications 1 à 4, dans lequel ladite formulation pouvant mousser comprend une résine pouvant durcir en une mousse rigide, un agent gonflant et un agent de durcissement.

7. Procédé selon l'une quelconque des revendications 1 à 6, dans lequel ladite formulation pouvant mousser est un polyuréthane, un polystyrène ou une résine phénolique.

8. Dispositif destiné à fabriquer des panneaux remplis de mousse, **caractérisé en ce que** ledit dispositif comprend :
un moyen (3) destiné à faire circuler de l'air chaud à travers au moins un panneau creux,
un moyen (9) destiné à introduire une formulation pouvant mousser dans la région creuse dudit panneau creux,
un moyen de presse (4) destiné à appliquer une charge prédéterminée audit panneau, en vue d'un durcissement au moins partiel de ladite formulation pouvant mousser dans ledit panneau lorsqu'il se trouve dans ledit moyen de presse,
un moyen d'étuve (11) en vue d'un post-durcissement dudit panneau au moins partiellement durci, jusqu'à ce que le moussage et le durcissement soient pratiquement achevés,
et un moyen de transport destiné au moins à transporter ledit panneau vers ledit moyen destiné à faire circuler de l'air chaud, ledit moyen destiné à introduire des formulations pouvant mousser, ledit moyen de presse et ledit moyen d'étuve.

9. Dispositif selon la revendication 8, lequel comprend en outre un moyen destiné à assembler le ou chaque panneau creux, et/ou un moyen (12) destiné à récupérer lesdits panneaux depuis ladite étuve de post-durcissement.

10. Dispositif selon la revendication 8 ou 9, dans lequel ledit moyen destiné à transporter lesdits panneaux est une voie ou une base de roulement, ou une table mobile.
